# EUROPÄISCHE PATENTSCHRIFT

(11) **EP 1 411 251 B1**
(45) Veröffentlichungstag und Bekanntmachung des Hinweises auf die Patenterteilung: **03.05.2006**
(21) Anmeldenummer: 03018881.7
(22) Anmeldetag: 20.08.2003
(51) Int. Cl.: F16B 13/06

(54) **Spreizanker und Verfahren zur Herstellung eines Spreizankers**
Expandable anchor and method of manufacturing it
Element d'ancrage expansible et procédé pour sa fabrication

(30) Priorität: 18.10.2002 DE 10248664
(43) Veröffentlichungstag der Anmeldung: 21.04.2004
(73) Patentinhaber: fischerwerke Artur Fischer GmbH & Co. KG, 72178 Waldachtal (DE)
(72) Erfinder: Haug, Willi, 72250 Freudenstadt (DE)

(56) Entgegenhaltungen:
- EP-A- 0 790 414
- EP-A- 0 874 166
- EP-A- 1 091 134
- DE-U- 29 805 837

## Beschreibung

Die Erfindung betrifft ein Verfahren zur Herstellung eines Spreizankers mit den Merkmalen des Oberbegriffs des Anspruchs 1.

Derartige Spreizanker sind beispielsweise EP 0 514 342 bekannt. Sie weisen ein bolzenartiges Ankergrundteil mit einem im Durchmesser reduzierten Abschnitt auf, der sich in Einbringrichtung des Spreizankers konisch erweitert und als Spreizabschnitt dient. Am entgegengesetzten Ende sind Befestigungsmittel ausgebildet, beispielsweise ein Gewinde. Über den Spreizabschnitt ist eine verschiebliche Spreizhülse gestülpt. Beim Einführen des Spreizankers in ein Bohrloch sorgen Vorsprünge an der Spreizhülse dafür, dass diese an der Bohrlochinnenwand einen ersten Halt bekommt. Durch Ziehen des Ankergrundteils am Befestigungsmittel gleitet die Spreizhülse auf dem Spreizabschnitt und wird aufgespreizt. Hierdurch kommt es zur Verankerung im Bohrloch. Damit ein solcher Spreizanker auch im Falle einer Rissbildung des Untergrunds sicher verankert, ist es notwendig, dass die Spreizhülse nachspreizen kann. Bei größer werdendem Bohrloch bewirken die Zugkräfte am Ankergrundteil, dass die Spreizhülse auf dem konischen Spreizabschnitt des Ankergrundteils gleitet und dadurch nachgespreizt wird. Voraussetzung hierfür ist insbesondere, dass die Kontaktfläche zwischen Spreizbereich und Spreizhülse ein Gleiten erlaubt. Vor allem bei Spreizankern aus nichtrostendem Stahl kommt es jedoch häufig schon beim Setzen des Ankers durch die hohen Anpresskräfte zu einem Kaltverschweißen von Ankergrundteil und Spreizhülse. Die EP 0 514 342 schlägt daher vor, auf den Spreizbereich eine Gleitschicht aufzutragen. Hierzu wird das Ankergrundteil zunächst gereinigt, die Beschichtung aufgebracht und dann in einem Ofen ausgehärtet. Dieses Verfahren ist sehr aufwändig.

Aus der EP-A 1 091 134 ist ein weiterer derartiger Spreizanker bekannt, der einen Konus zum Aufspreizen einer Spreizhülse aufweist. Eine Oberfläche des Konus ist aufgeraut um einem Kaltverschweißen der Spreizhülse mit dem Spreizanker vorzubeugen. Zum Aufrauen schlägt die Druckschrift Strahlverfahren wie Sandstrahlen, Kugelstrahlen, Strahlen mit Kunststoffgranulat, mit Glasmehl oder Glas-Strahlperlen und im Trockenstrahl oder Nassschlammverfahren vor. Eine weitere Möglichkeit, die Oberfläche aufzurauen, ist ein Funkenerodieren oder Ätzen.

Die EP-A 790 414 schlägt einen Spreizanker vor, bei dem die Rauigkeit der Innenseite einer Spreizhülse erhöht ist. Auch hier wird ein Funkenerodieren zur Erhöhung der Rauigkeit der Oberfläche vorgeschlagen.

Der Erfindung liegt die Aufgabe zugrunde, ein einfaches Verfahren zur Herstellung eines Spreizankers zu schaffen, der ein sicheres Nachspreizverhalten gewährleistet.

Diese Aufgabe wird erfindungsgemäß durch die Merkmale des Anspruchs 1 gelöst. Die Oberfläche des Spreizabschnitts weist Krater auf, während die Oberfläche der Spreizhülse als Gleitpartner vergleichsweise glatt ist. Die Spreizhülse gleitet daher nicht auf einer geschlossenen Oberfläche sondern lediglich auf den Rändern der Krater. Dies verhindert ein Kaltverschweißen mit der Spreizhülse und gewährleistet ein gutes Gleitverhalten zwischen den Bauteilen.

Zur Herstellung des Spreizankers wird erfindungsgemäß die Oberfläche des Ankergrundteils funkenerosiv bearbeitet. Dabei wird zwischen dem Ankergrundteil und einer Elektrode eine elektrische Spannung erzeugt und der Spalt zwischen den beiden Polen so eingestellt, dass es zum Überschlag von Funken kommt. Aufgrund der entstehenden hohen Temperaturen wird das Material des Ankergrundteils im Bereich der Funken aufgeschmolzen und teilweise verdampft. Teilweise wird dieses Material von der Umgebung weggetragen. Hierdurch entsteht eine charakteristische Kraterstruktur. Als Elektrodenmaterial verwendet die Erfindung Wolfram und als Dielektrikum Luft.

In einer bevorzugten Ausführung weist die Oberfläche des Spreizabschnitts eine Kraterdichte zwischen 6 und 30 Krater pro mm² auf. Versuche haben gezeigt, dass in diesem Bereich ein besonders günstiges Verhalten bezüglich der Neigung zur Kaltverschweißung erreicht wird.

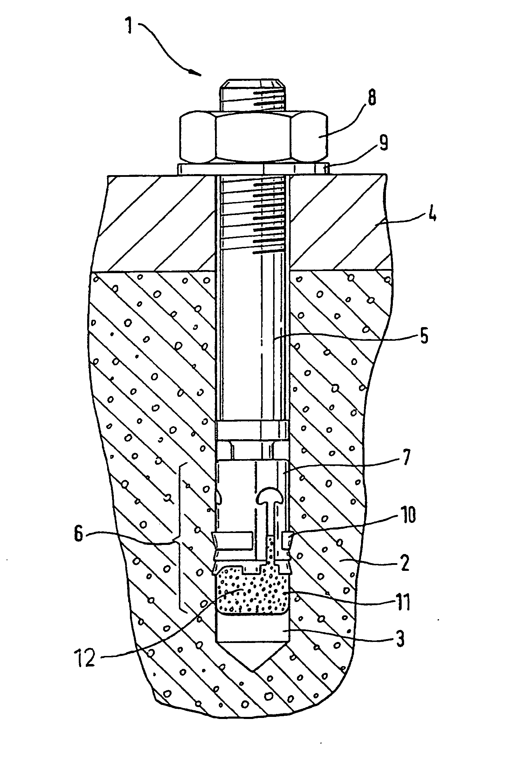

Die Erfindung wird nachfolgend anhand eines in der Zeichnung dargestellten Ausführungsbeispiels näher erläutert. Figur 1 zeigt eine Schnittzeichnung eines erfindungsgemäßen Spreizankers im eingebauten Zustand. Der Spreizanker 1 ist in einem in einen Untergrund 2 eingebrachten Bohrloch 3 verspreizt und dient der Befestigung des Befestigungsgegenstands 4. Er weist ein Ankergrundteil 5 mit einem Spreizabschnitt 6 auf, der im Durchmesser reduziert ist und in Einbringrichtung eine Erweiterung 12 aufweist, die der Aufspreizung der Spreizhülse 7 dient. Diese ist verschiebbar auf dem Spreizabschnitt 6 angeordnet. Beim Setzen des Spreizankers 1 wird dieser in das Bohrloch 3 eingeschoben und dann mittels der Mutter 8 und der Unterlegscheibe 9 verspannt. Dabei sorgen die Vorsprünge 10 dafür, dass die Spreizhülse 7 vom Untergrund 2 gehalten wird und der Spreizabschnitt 6 des Ankergrundteils 5 in die Spreizhülse 7 eingezogen wird. Die Oberfläche der Erweiterung 12 des Spreizabschnitts 6 weist Krater 11 auf, wodurch es auch bei Edelstählen nicht zu einem Kaltverschweißen von Spreizabschnitt 6 und Spreizhülse 7 kommt. Damit kann die Spreizhülse 7 im Falle einer Rissbildung im Untergrund 2 nachspreizen, d. h. das Ankergrundteil 5 wird aufgrund der lastbedingten Zugkräfte weiter in die Spreizhülse 7 eingezogen.

## Patentansprüche

1. Verfahren zur Herstellung eines Spreizankers (1) aus Edelstahl, der ein Ankergrundteil (5) aufweist, das in ein Bohrloch (3) einbringbar ist und einen im Durchmesser reduzierten Spreizabschnitt (6) aufweist, der sich in Einbringrichtung des Spreizankers (1) erweitert, und auf den eine Spreizhülse (7) axial verschiebbar aufgesetzt ist, wobei mindestens die Oberfläche der Erweiterung (12) des Spreizabschnitts (6) Krater (11) aufweist, die durch Funkenerosion erzeugt werden, **dadurch gekennzeichnet, dass** für die Funkenerosion als Elektrodenmaterial Wolfram und als Dielektrikum Luft verwendet wird.

2. Verfahren nach Anspruch 1, **dadurch gekennzeichnet, dass** die Oberfläche der Erweiterung (12) des Spreizabschnitts (6) eine Kraterdichte zwischen 6 und 30 Krater pro mm² aufweist.

## Claims

1. Method of producing an expansible anchor (1) of stainless steel comprising a basic anchor part (5), which basic anchor part (5) is arranged to be introduced into a drilled hole (3) and comprises an expander portion (6) of reduced diameter which widens out in the direction of introduction of the expansible anchor (1) and on which an expansion sleeve (7) is mounted so as to be axially displaceable, wherein at least the surface of the widening (12) of the expander portion (6) has craters (11) which are produced by spark erosion, **characterised In that**, for the spark erosion, tungsten is used as electrode material and air is used as dielectric.

2. Method according to claim 1, **characterised in that** the surface of the widening (12) of the expander portion (6) has a crater density of between 6 and 30 craters per mm².

## Revendications

1. Procédé de fabrication d'un ancrage extensible (1) en acier fin qui présente une pièce de base d'ancrage (5) qui est intégrable dans un trou de sondage (3) et présente une section d'extension (6) réduite en diamètre, qui se prolonge dans le sens d'intégration de l'ancrage extensible (1), et sur laquelle une douille d'extension (7) est placée de manière axialement déplaçable, moyennant quoi au moins la surface de la prolongation (12) de la section d'extension (6) présente des cratères (11) qui ont été produits par électroérosion,
**caractérisé en ce que** pour l'électroérosion, on utilise du tungstène comme matériau d'électrode et de l'air comme diélectrique.

2. Procédé de fabrication selon la revendication 1, **caractérisé en ce que** la surface de la prolongation (12) de la section d'extension (6), présente une épaisseur de cratère d'entre 6 et 30 cratères par mm².
